# EUROPÄISCHE PATENTSCHRIFT

(11) **EP 0 773 979 B1**
(45) Veröffentlichungstag und Bekanntmachung des Hinweises auf die Patenterteilung: **13.10.1999**
(21) Anmeldenummer: 95928472.0
(22) Anmeldetag: 25.07.1995
(51) Int. Cl.: C09J 5/08, H01F 27/32, H01F 41/12, C08G 18/67

(54) **EIN- ODER ZWEIKOMPONENTIGER REAKTIONSKLEBSTOFF**
SINGLE- OR TWO-COMPONENT REACTION ADHESIVE
ADHESIF DE REACTION A UN OU DEUX COMPOSANT(S)

(30) Priorität: 03.08.1994 DE 4427471
(43) Veröffentlichungstag der Anmeldung: 21.05.1997
(73) Patentinhaber: Henkel Kommanditgesellschaft auf Aktien, 40191 Düsseldorf (DE)
(72) Erfinder: FRIESE, Carsten, D-22559 Hamburg (DE); BERGMANN, Frank, D-30629 Hannover (DE); HUVER, Thomas, D-40625 Düsseldorf (DE)
(86) Internationale Anmeldenummer: EP9502961
(87) Internationale Veröffentlichungsnummer: WO9604347

(56) Entgegenhaltungen:
- EP-A- 0 304 675
- EP-A- 0 408 048
- EP-A- 0 562 394
- FR-A- 2 270 278
- US-A- 3 579 163
- US-A- 4 695 596
- US-A- 4 772 031
- DATABASE WPI Week 7408, 5. Februar 1974 Derwent Publications Ltd., London, GB; AN 74-13467V 'Distribution transformer' & CA,A,941 495 (WESTINGHOUSE ELECTRIC)

## Beschreibung

Die Erfindung betrifft einen ein- oder zweikomponentigen Reaktionsklebstoff, seine Herstellung und Verwendung.

Für Verklebungen von Substraten mit kleinen und mittleren Spalten (0,01 bis 0,2 mm) werden je nach Anforderung und Materialteilung niedrig- bis mittel-viskose Klebstoffe verwendet, z.B. Sicomet 85, Sicomet 77, omniFit 15 M und omniFit 200 M. Die Viskosität dieser Klebstoffe beträgt bei 20 °C bis zu ca. 1000 mPas nach Brookfield. Diese Klebstoffe eignen sich hervorragend, um den gesamten Spalt auszufüllen, insbesondere wenn die zu verklebenden Teile vor dem Klebstoffauftrag bereits gefügt sind und gute Kapillareffekte zur vollständigen Benetzung der gesamten Substratoberflächen gefordert sind. Sofern größere Spalten (0,2 bis 2 mm) oder Hohlräume überbrückt bzw. ausgefüllt werden müssen, werden hochviskose bzw. thixotropierte Klebstoffe mit spaltüberbrückenden Eigenschaften eingesetzt (z.B. metallon FL und Stabilit express). Die Viskosität von metallon FL beträgt 110 000 bis 120 000 mPas für das Bindemittel und 15 000 bis 30 000 für den Härter (siehe Techn. Information "Sicomet/omniFit" der Firma Henkel KGaA). Aufgrund der hohen Viskosität bzw. geringer Kapillareffekte können bereits gefügte Substrate mit größeren Spalten schlecht oder gar nicht durch anschließenden Klebstoffauftrag verklebt werden.

Aus US-A-4 772 031 sind klebende Acryldichtungsmassen bekannt, die elastomer-modifizierte Acrylklebstoffe und Treibmittel enthalten und durch Aktivierung mittels eines Katalysators exotherm abbinden.

Für Verklebungen von bereits gefügten Substraten, bei denen sowohl kleine als auch größere Spalten bzw. Hohlräume auftreten, sind die oben aufgeführten Klebstoffe nicht geeignet, sei es aufgrund zu geringer Kapillareffekte bzw. unvollständiger Benetzung der Substratoberflächen oder aber wegen fehlender spaltüberbrückender bzw. hohlraumausfüllender Eigenschaften.

Ausgehend von diesem Stand der Technik bestand die erfindungsgemäße Aufgabe in der Entwicklung von niedrig- bis mittel-viskosen Reaktionsklebstoffen mit spaltüberbrückenden bzw. hohlraumausfüllenden Klebeigenschaften.

Die erfindungsgemäße Lösung ist den Patentansprüchen zu entnehmen. Sie besteht im wesentlichen in einem ein- oder zweikomponentigen Reaktionsklebstoff, der beim Aushärten porös wird.

Die Viskosität des Reaktionsklebstoffes vor der Aushärtung beträgt weniger als 10, vorzugsweise weniger als 2 und insbesondere weniger als 0,5 Pa·s bei 20 °C mit einem Kegelplatten-Viskosimeter der Fa. Physica (DIN 54453). Sie liegt oberhalb von vorzugsweise 1 mPas.

Die Porosität des ausgehärteten Klebstoffes beträgt mindestens 3, vorzugsweise mindestens 10 und insbesondere mindestens 20 Vol-%. Zu ihrer Bestimmung wird der flüssige Klebstoff in ein Reagenzglas gegeben und die Höhe der Flüssigkeitssäule bestimmt. Dann wird der Klebstoff ausgehärtet, z.B. durch Erwärmung. Nach der Aushärtung wird die Höhe des nun festen Klebstoffes im Reagenzglas bestimmt.

Bezieht man die Höhendifferenz auf die Ausgangshöhe, so ergibt sich die Porosität.

Das Porensystem wird durch den Zusatz eines Treibmittels zum Reaktionsklebstoff erzeugt. Unter einem Treibmittel ist ein Stoff zu verstehen, der bei der Aushärtung ein Gas bildet. Um eine Relation zwischen Aushärtung und Gasbildung zu gewährleisten, sollte das Treibmittel gleichzeitig Initiator oder Katalysator für die Aushärtungsreaktion sein. Das Treibmittel kann mit den übrigen Bestandteilen des Klebstoffes gemischt werden, lange bevor er verwendet wird (1-K-Klebstoff). Es kann aber auch erst kurz vor der Verwendung der Grundmischung zugemischt werden, zweckmäßigerweise pulverförmig (2-K-Klebstoff). Ein konkretes Beispiel für einen derartigen Stoff ist das Azobisisobutyronitril (AIBN). Beim Erwärmen zersetzt sich das Azobisisobutyronitril in Stickstoff, der das Porensystem bildet, und in Radikale, die die Polymerisation z.B. von Acrylaten initiieren. Überraschenderweise erhält man also geschäumte ausgehärtete Klebstoffpolymere. Je nach Aushärtungstemperatur und Konzentration des Treibmittels erhält man unterschiedliche Mengen an Gasblasen bzw. Hohlräumen. Unter Umständen kann es nützlich sein, Schaumstabilisatoren zuzusetzen.

Die Grundmischung des Reaktionsklebstoffes enthalten spezielle radikalisch polymerisierbare Monomere mit einer olefinischen C-C-Doppelbindung, insbesondere (Meth)acrylate. Für Klebstoffe besonders geeignete (Meth)acrylate sind in der DE 43 40 095 beschrieben. Für die Reaktionsklebstoffe der vorliegende Erfindung werden eine oder mehrere der radikalisch polymerisierbaren Verbindungen (A) und/oder (B) der folgenden allgemeinen Formel verwendet:

(H₂C=CR¹-C(=O)-O-R²-O-C(=O)-NH-)ₙ R³ (I)

worin
- R¹ =: Wasserstoff oder eine Methylgruppe,
- R² =: eine lineare oder verzweigte Alkylgruppe mit 2 bis 6 Kohlenstoffatomen oder Alkylenoxide mit 4 bis 21 Kohlenstoffatomen und
- n =: 1, 2 oder 3 ist,

(A) wobei R³ für n = 1 ist:
   - eine Arylgruppe mit 6 bis 18 Kohlenstoffatomen,
   - geradkettige oder verzweigte Alkylgruppe mit 1 bis 18 Kohlenstoffatomen oder
   - cycloalkylgruppe mit 3 bis 12 Kohlenstoffatomen;
(B) R³ für n = 2 ist:

   [-Q-NH-C(=O)]₂](-O-R⁴-O-C(=O)-NH-Q'-NH-C(=O))ₘ-O-R⁴-O-]

   wobei m = 0 bis 10 ist und
   - R⁴: a) ein Polycaprolactondiol-Rest
   b) ein Polytetrahydrofurfuryldiol-Rest oder
   c) ein Diol-Rest ist, der sich von einem Polyesterdiol ableitet, der gekennzeichnet ist durch ein C:=-Verhältnis von > 2,6, ein C:H-Verhältnis von < 10 und ein Molekulargewicht von 1000 bis 20000 oder
   - R³: für n = 3 ist:

   [-Q-NH-C(=O)-O-((CH₂)₅-C(=O))ₚ-]₃ R⁵,

   wobei R⁵ ein Triol-Rest eines 3 bis 6 Kohlenstoffatome enthaltenden, linearen oder verzweigten dreiwertigen Alkohols und p = 1 bis 10 ist und

Q und Q' unabhängig voneinander 6 bis 18 Kohlenstoffatome enthaltende aromatische, aliphatische oder cycloaliphatische Gruppen sind, die sich von Diisocyanaten oder Diisocyanatgemischen ableiten,
sowie gegebenenfalls ein oder mehrere (Meth)acrylat-Comonomere (C), wobei die Zusammensetzung
- 0-80 Gew.-% einer oder mehrerer der Verbindungen (B) und
   100-20 Gew.-% einer oder mehrerer der Verbindungen (A) oder
   100-20 Gew.-% eines Gemisches einer oder mehrerer der Verbindungen (A) und (C),
oder
- 2-80 Gew.-% einer oder mehrerer der Verbindungen (B) und
   98-20 Gew.-% einer oder mehrerer der Verbindungen (C), jeweils bezogen auf die Gesamtmenge (A)+(B)+(C), enthält.

Die Verbindungen der der Formel (I) sind herstellbar nach im Stand der Technik an sich bekannten Verfahren durch Umsetzung eines in der Estergruppe Hydroxylgruppen enthaltenden Acrylates (R¹=H) oder Methacrylates (R¹=CH₃) mit Isocyanatgruppen enthaltenden Verbindungen unter Bildung einer Urethangruppe.

Bei den Acrylaten oder Methacrylaten handelt es sich erfindungsgemäß um Hydroxyalkylacrylate oder -Methacrylate, wobei die Alkylgruppen linear oder verzweigt sein können und zwischen 2 und 6 Kohlenstoffatome enthalten. Gemäß der Erfindung können auch die Ester von Acrylsäure und Methacrylsäure mit Polyethylenglykol und/oder Polypropylenglykol eingesetzt werden. Derartige Acrylate oder Methacrylate enthalten 4 bis 21 Kohlenstoffatome in der Estergruppe, entsprechend 2 bis 10 Ethylenoxideinheiten und 1 bis 7 Propylenoxideinheiten. Die Herstellung derartiger Ester ist dem Fachmann bekannt.

### Komponente (A):

Urethan(meth)acrylate der Formel (I) für n = 1 sind bekannt und können nach bekannten Verfahren aus den zugrundeliegenden Isocyanaten durch Umsetzung mit den entsprechenden Hydroxylgruppen enthaltenden (Meth)acrylaten der allgemeinen Formel

H₂C=CR¹-C(=O)-O-R²-OH

erhalten werden.

Derartige Verfahren sind in der W0-A-86/01153 oder US-A-4 439 600 beschrieben.

Geeignete Acrylate oder Methacrylate sind solche, für die R² eine Ethylen-, Propylen-, Isopropylen, n-Butylen-, Isobutylen-Gruppe oder 4 bis 7 Ethylenoxid- oder Propylenoxideinheiten enthalten.

Bevorzugt für die Umsetzung der Isocyanate mit den Hydroxylgruppen tragenden Acrylaten oder Methacrylaten werden jedoch Hydroxyethylacrylat, Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexylacrylat, 6-Hydroxyhexylmethacrylat, Polyethylenglykolacrylat, Polyethylglykolmethacrylat, Polypropylenglykolacrylat und Polypropylenglykolmethacrylat.

Bei den geradkettigen oder verzweigten Alkylgruppen mit 1 bis 8 Kohlenstoffatomen für R³ handelt es sich insbesondere um Methyl-, Ethyl-, Propyl-, Isopropyl-, n-Butyl-, Isobutyl-, tert.-Butyl-, Pentyl-, Isopentyl-, Neopentyl- oder die Hexylgruppe.

Bei den Cycloalkylgruppen mit 3 bis 12 Kohlenstoffatomen handelt es sich vorzugsweise um solche, die ausgewählt sind aus der Cyclopropyl-, Cyclobutyl-, Cyclopentyl-, Cyclohexyl- und Cycloheptylgruppe.

Als aromatische, 6 bis 18 Kohlenstoffatome enthaltende Gruppen sind insbesondere die Phenyl-, 2-Toluenyl-, 4-Toluenyl und die Xylenylgruppe zu erwähnen, die durch Reaktion der Hydroxylgruppen enthalten (Meth)acrylate mit den entsprechenden Isocyanaten eingeführt wird.

### Komponente (B):

Bei den Verbindungen der allgemeinen Formel (I) für den Fall, daß n = 2 ist, handelt es sich um Umsetzungsprodukte der obengenannten Hydroxylgruppen enthaltenden Acrylate oder Methacrylate mit Isocyanaten, die erhältlich sind durch Reaktion von geeigneten Diolen mit Diisocyanaten. Bei den Diolen handelt es sich um a) Polycaprolactondiole, b) Polytetrahydrofurfuryldiole und c) spezielle Polyesterdiole.
Das Molverhältnis bei der Reaktion von den Diolen mit den Diisocyanaten kann im Verhältnis von 1:2 bis zu 1:1,1 variieren.
a) Polycaprolactondiole sind nach an sich bekannten Verfahren erhältlich durch Ringöffnungspolymerisation von Caprolacton mit geeigneten Diolen, wobei das Verhältnis von Caprolacton zum Diol 1 bis 20 beträgt, also 2 bis 40 Mol Caprolacton pro Mol Diol eingesetzt wird. Das Molekulargewicht der Polycaprolactondiole beträgt zwischen 200 und 4000.
   Als Diole kommen insbesondere lineare oder verzweigte zweiwertige, 2 bis 6 Kohlenstoffatome enthaltende Alkohole in Frage, die ausgewählt sind aus Ethylenglykol, 1,2-Propandiol, 1,3-Propandiol, 1,2-, 1,3- oder 1,4-Butandiol, 1,5-Pentandiol, 2-Methyl-1,4-butandiol, 2,2-Dimethyl-1,3-Propandiol, 1,2- oder 1,6-Hexandiol, 1,10-Decandiol.
   Die Reaktionsrprodukte aus dem Diol und dem Caprolacton werden anschließend nach dem dem Fachmann bekannten Verfahren mit aromatischen, aliphatischen oder cyclischen Diisocyanaten umgesetzt. Geeignete Diisocyanate, von denen sich Q und unabhängig davon auch Q'ableitet, sind ausgewählt aus 2,4-Toluendiisocyanat, 2,6-Toluendiisocyanat, 4,4'-Diphenylmethandiisocyanat (MDI), 4,4'-Dicyclohexyldiisocyanat, meta- und para-Tetramethylxylendiisocyanat, 3-Isocyanatomethyl-3,5,5-trimethylcyclohexylisocyanat (Isophorondiisocyanat), Hexamethylendiisocyanat, 1,5-Naphthylendiisocyanat, Dianisidindiisocyanat, Di-(2-isocyanatoethyl)-bicyclo[2.2.1]-hept-5-en-2,3-dicarboxylat, 2,2,4- und 2,4,4-Trimethylenhexamethylendiisocyanat und Gemischen davon.
   Anschließend wird das Reaktionsprodukt aus dem Diol, dem Caprolacton und dem Diisocyanat nach an sich bekannten Verfahren mit dem Hydroxylgruppen enthaltenden Acrylat oder Methacrylat zum Polyurethan(meth)acrylat umgesetzt.
b) Der Aufbau der sich von Polytetrahydrofurfuryldiol ableitenden Verbindungen (B) erfolgt prinzipiell nach dem gleichen Schema wie unter a) beschrieben. Zunächst wird Polytetrahydrofurfuryldiol mit einem der oben unter a) genannten Diisocyanate zur Reaktion gebracht und das Reaktionsprodukt daraus mit den bereits unter a) erwähnten Hydroxylgruppen enthaltenden Acrylaten oder Methacrylaten zum Polyurethan(meth)acrylat umgesetzt. Hinsichtlich des Verfahrens zur Umsetzung von Diolen mit Diisocyanaten wird auf die dem Fachmann bekannte einschlägige Fachliteratur verwiesen. Das Molekulargewicht der Produkte beträgt zwischen 200 und 4500.
c) Besonders gute Eigenschaften, insbesondere hinsichtlich der Hydrophobierung wird durch den Einsatz von Polyurethan(meth)acrylaten auf Basis spezieller Polyesterdiole erreicht. Diese Polyurethan(meth)acrylate weisen eine besondere elastifizierende Wirkung auf.

Bei diesen Polyurethan(meth)acrylaten handelt es sich um Verbindungen der allgemeinen Formel II

[H₂C=CR₁-C(=O)-O-R₂-O-C(=O)-NH-Q-NH-C(=O]₂[(-O-R⁴-O-C(=O)-NH-Q'-NH-C(=O))ₘ-O-R⁴-O-] (II)

wobei R₁, R₂, Q und Q' den obengenannten Definitionen entsprechen.

R⁴ entspricht Polyesterdiol-Resten, die sich von Polyesterdiolen ableiten, die gekennzeichnet durch ein C:0-Verhältnis von > 2,6, vorzugsweise > 3,0 und ein C:H-Verhältnis von < 10. Ferner zeichnen sich diese Polyesterdiole durch ein Molekulargewicht von 1000 bis 20000, insbesondere von 1000 bis 10000 aus.

Die Herstellung dieser speziellen Polyesterdiole erfolgt durch Umsetzung von langkettigen Diolen, insbesondere Dimerdiol (hydrierte Dimerfettsäure) mit kürzerkettigen 4 bis 8 Kohlenstoffatome enthaltenden Dicarbonsäuren oder deren Anhydriden, insbesondere Bernsteinsäure oder Bernsteinsäureanhydrid. Die Polyesterdiole können auch hergestellt werden durch Umsetzung von kürzerkettigen 4 bis 8 Kohlenstoffatome enthaltenden Diolen, insbesondere 1,6-Hexandiol mit langkettigen Fettsäuren, insbesondere Dimerfettsäure-Gemisch aus dimerisierten Fettsäuren von acyclischen und cyclischen Dicarbonsäuren mit durchschnittlich 36 Kohlenstoffatomen. Es können aber auch Gemische aus langkettigen Diolen mit kürzerkettigen Diolen eingesetzt werden, wie insbesondere Gemische aus Hexandiol und Polyethylenglykol oder aus Dimerdiol und Diethylenglykol.

Allgemein als Diole besonders bevorzugt sind lineare oder verzweigte C₂-C₄₄-Alkyldiole wie Ethylenglykol, 1,2- oder 1,3-Propylenglykol, 1,2-, 1,3- oder 1,4-Butandiol, Neopentylglykol, 1,2- oder 1,6-Hexandiol, 1,10-Decandiol, 1,12-0ctadecandiol. In Frage kommen aber auch cyclische C₆-C₄₄-Alkyldiole.

Ferner bevorzugt sind Ethergruppen enthaltende Diole, wie beispielsweise Di-, Tri- oder Tetraethylen- oder -propylenglykol oder deren oligomeren Homologen.

Allgemein als Dicarbonsäure besonders bevorzugt sind lineare oder verzweigte C₂-C₄₄-Alkyldicarbonsäuren wie Oxalsäure, Malonsäure, Bernsteinsäure, Glutarsäure, Adipinsäure, Pimelinsäure, Korksäure, Azealinsäure, Nonandicarbonsäure, Decandicarbonsäure, Undecandicarbonsäure oder deren technische Gemische. Zur Reaktion mit den Diolen können ebenfalls ungesättigte C₄-C₄₄-Dicarbonsäuren wie Maleinsäure, Fumarsäure, Itaconsäure oder Aconitsäure eingesetzt werden.

Die Veresterung kann nach an sich bekannten Verfahren in Gegenwart eines Katalysators in einem geeigneten Lösungsmittel bei erhöhter Temperatur unter azeotroper Entfernung des Reaktionswassres erfolgen. Als Katalysator ist Zinn(II)octoat und als Lösungsmittel Xylen bevorzugt.

Die so gewonnenen Polyesterdiole werden dann mit einem der oben unter a) genannten Diisocyanate umgesetzt und anschließend mit den bereits unter a) erwähnten Hydroxylgruppen enthaltenden Acrylaten oder Methacrylaten zum Polyurethan(meth)acrylat umgesetzt.

Eine oder mehrere dieser auf den speziellen Polyesterdiolen basierenden Polyurethan(meth)acrylate können im Gemisch mit Aktivatoren und gegebenenfalls weiteren üblichen Zusätzen als Klebstoffzusammensetzung eingesetzt werden.

Bei den Verbindungen der allgemeinen Formel (I) für den Fall, daß n = 3 ist, handelt es sich um Umsetzungsprodukte der obengenannten Hydroxylgruppen enthaltenden Acrylate oder Methacrylate mit Isocyanaten, die erhältlich sind durch Umsetzung von geeigneten 3 bis 6 Kohlenstoffatome enthaltenden, linearen oder verzweigten dreiwertigen Alkoholen (Triolen) mit Caprolacton und anschließender Reaktion mit Diisocyanaten.

Polycaprolactontriole sind nach an sich bekannten Verfahren erhältlich durch Ringöffnungspolymerisation von Caprolacton mit geeigneten Triolen, wobei das Verhältnis von Caprolacton zu Triol 1 bis 10, beträgt, also 3 bis 30 Mol Caprolacton mit einem Mol Triol umgesetzt werden.
Als Triole kommen insbesondere solche in Frage, die ausgewählt sind aus Glycerin, 1,2,4-Butantriol, Trimethylolpropan (2-Hydroxymethyl-2-ethyl-1,3-propandiol) und Trimethylolethan (2-Methyl-2-hydroxymethyl-1,3-propandiol).

Die Reaktionsprodukte aus dem Triol und dem Caprolacton werden anschließend nach dem Fachmann bekannten Verfahren mit den unter a) genannten Diisocyanaten umgesetzt. Anschließend wird das Reaktionsprodukt aus dem Triol, dem Caprolacton und dem Diisocyanat nach an sich bekannten Verfahren mit dem Hydroxylgruppen enthaltenden Acrylat oder Methacrylat zum Polyurethan(meth)acrylat umgesetzt.

### Komponente (C):

Die Klebstoffzusammensetzung kann ferner ein oder mehrere Acrylat- oder Methacrylat-Comonomere (C) enthalten. Diese Monomere (C) sind ausgewählt aus Allylacrylat, Allylmethacrylat, Methylacrylat, Methylmethacrylat 2-Hydroxyethylacrylat, 2-Hydroxyethylmethacrylat, 2- oder 3-Hydroxypropylacrylat, 2- oder 3-Hydroxypropylmethacrylat, 6-Hydroxyhexylacrylat, 6-Hydroxyhexylmethacrylat, Benzylmethacrylat, Phenylethylmethacrylat, 2-Phenoxyethylmethacrylat, Morpholinoethylmethacrylat, Glycidylmethacrylat, Piperidylacrylamid, Neopentylmethacrylat, Cyclohexylmethacrylat, tert.-Butylmethacrylat und Tetrahydrofurfurylmethacrylat oder Gemischen davon.

Vorzugsweise enthält die erfindungsgemäße Zusammensetzung 10 bis 70 Gew.-% einer oder mehrerer der Verbindungen (B) und 90 bis 30 Gew.-% einer oder mehrerer der Verbindung (A) und/oder (C), bezogen auf die Gesamtmenge (A)+(B)+(C).

Zur Steuerung des Reaktionsablaufs und/oder der offenen Topfzeit können in an sich bekannter Weise Inhibitoren und/oder Stabilisatoren gegen vorzeitige Auslösung der radikalischen Reaktion mitverwendet werden. Ihre Menge bemißt sich nach dem angegebenen Zweck. Sie kann im Einzelfall durch fachgerechte Überlegungen und/oder durch Vorversuche einfach ermittelt werden. Die mitverwendeten Stabilisatoren werden üblicherweise wenige Prozent - z.B. etwa 2 bis 5 Gew.-% - des Gesamtgemisches nicht überschreiten und liegen im allgemeinen unterhalb 1 Gew.-%, bezogen auf das Gesamtgemisch.

Die Erfindung erlaubt jeweils die Zusammenstellung optimierter Klebstoffzusammensetzungen. Unter Wahrung der erfindungsgemäßen Gesetzmäßigkeiten können lösliche und/oder unlösliche Füllstoffe, Elastifizierungsmittel, Aktivatoren, Pigmente, Haftvermittler und dergleichen mitverwendet werden, ohne daß die Funktionsfähigkeit der erfindungsgemäßen Zusammensetzungen gefährdet ist. Der erfindungsgemäße Reaktionsklebstoff enthält jedoch vorzugsweise kein Lösungsmittel.

Die Lagerstabilität des erfindungsgemäßen Reaktionsklebstoffes entspricht der des bekannten Reaktionsklebstoffes ohne den Treibmittelzusatz.

Die Qualität der Klebfestigkeit derartiger Klebstoffe kann mittels Zugscherversuch ermittelt werden und hängt ebenfalls von der Wahl der Monomere bzw. Oligomere und der gewählten Aushärtungstemperatur sowie von der Porosität ab.

Als typische Anwendung sei die Verklebung einer Wicklung mit einem Ferritkern zur Herstellung einer Drosselspule beschrieben: Bei dieser Verklebung treten, bedingt durch die Geometrie der Wicklung und die zylindrische Form des Ferrit-Kerns - in Abhängigkeit von der Größe der Drosselspule - in regelmäßigen Abständen kleine Spalten und größere Hohlräume auf. Durch geeignete Auswahl (Viskosität, Aktivierungstemperatur und Reaktionszeit) und Applikation des warmhärtenden schäumenden 1K-Reaktivklebstoffes können derartige Substrate schnell und hochfest verklebt werden. Von besonderer Bedeutung ist dabei, daß der Zusatz von wenigen Prozenten an AIBN die Viskosität der Monomeren deutlich verringert. So beträgt z.B. die Viskosität eines Monomerengemisches aus 60 % eines 80 %igen Polyurethanmethacrylates (PUMA 2), 25 % an Hydroxypropylmethacrylat und 15 % an Benzylmethacrylat bei 20 °C ohne AIBN 4500 mPa·s und mit 2 % AIBN 3400 mPa·s.
Die Erfindung wird durch die nachfolgenden Experimente näher beschrieben:

### Messungen:

Die Viskosität wurde mittels eines Kegelplattenviskosimeters gemessen. Die Zugscherfestigkeit (ZSF) wurde nach DIN 53283 an Stahl/Stahl (korundgestrahlt) gemessen. Die Volumenzunahme bzw. Schaumentwicklung von flüssigem Klebstoff zu ausgehärtetem Klebstoff wurde im Reagenzglas mit jeweils 3 g Klebstoff durch eine Längendifferenzmessung bestimmt.

### Allgemeine Herstellvorschrift:

Das oder die Monomeren werden vorgelegt. Azobisisobutyronitril (AIBN) wird unter Rühren bei Raumtemperatur innerhalb 1 h gelöst. Anschließend wird das Polyurethandimethacrylat, sofern es Klebstoffbestandteil ist, unter Rühren zugegeben. Danach wird 2 h bis zur Homogenität gerührt. Die so hergestellten Klebstoffe sind bei Raumtemperatur lagerstabil werden aber vorzugsweise kühl gelagert. Aushärtung wird erst oberhalb von 40 °C beobachtet.

### Beispiele:

Die in den Beispielen verwendeten Polyurethandimethacrylate PUMA 1 und PUMA 2 werden als 80 %ige Lösungen in Hydroxypropylmethacrylat eingesetzt.

Sie wurden auf folgende Weise hergestellt:

### Polyurethanmethacrylat-Gemische auf Polycaprolactondiol- und - triolbasis (PUMA1)

Edukte:

| | |
|---|---|
| 540 g (1 mol) | Polycaprolactontriol, MW 540 (CAPA 305, Handelsprodukt der Firma Solvay) |
| 1376 g (0.65 mol) | Polycaprolactondiol, MW 2000 (CAPA 220, Handelsprodukt der Firma Solvay) |
| 748 g (4.3 mol) | 2,4-Toluendiisocyanat (Desmodur T 100, Handelsprodukt der Firma Bayer) |
| 1430 g (9.9 mol) | Hydroxypropylmethacrylat (HPMA 97, Handelsprodukt der Firma Röhm) |
| 1.23 g | Hydrochinonmonomethylether (Handelsprodukt der Firma Fluka) |

### Herstellvorschrift:

Die Polyole werden in einer Rührapparatur vorgelegt und auf 50 °C erhitzt.

Das Toluendiisocyanat (TDI) wird innerhalb von 30 min zugetropft, wobei die Temperatur der Mischung 55 °C nicht übersteigt. Nach beendeter Zugabe wird für 45 min auf 60 °C erhitzt, bis der NCO-Gehalt einen Wert von 6,8 % erreicht hat. Es werden der Hydrochinonmonomethylether und das HPMA zugegeben und die Mischung solange auf 80 °C erhitzt, bis der NCO-Gehalt < 0,1 % ist.
Es handelt sich bei dem Reaktionsprodukt um eine 80 %ige Lösung des Polyurethan(meth)acrylates in (überschüssigem) HPMA.
Für das PUMA 2 wurde anstelle von TDI das MDI eingesetzt
1. 98 % Triethylenglykoldimethacrylat / 2 % AIBN
   Viskosität: 10 mPa·s; ZSF (Aushärtung: 1 h /120 °C): 8,9 N/mm²;
   Volumenzunahme bei einer Füllhöhe von 35 mm (entspricht 3 g Klebstoff) bei 100 °C nach 80 sek.: 15 mm (entspricht 43 %).
2. 98 % Tetrahydrofurfurylmethacrylat / 2 % AIBN
   Viskosität: 3 mPa·s; ZSF (Aushärtung: 1 h / 120 °C): 3,3 N/mm²;
   Volumenzunahme bei einer Füllhöhe von 36 mm (entspricht 3 g Klebstoff) bei 100 °C nach 120 sek.: 1 mm (entspricht 3 %).
3. 98 % Hydroxypropylmethacrylat / 2 % AIBN
   Viskosität: 10 mPa·s;
   ZSF (Aushärtung: 3 h / 80 °C): 15,9 N/mm²; ZSF (Aushärtung: 1 h / 120 °C): 9,3 N/mm²;
   ZSF (Aushärtung: 0,5 h / 90 °C): 5,9 N/mm²;
   Volumenzunahme bei einer Füllhöhe von 36 mm (entspricht 3 g Klebstoff) bei 100 °C nach 110 sek.: 5 mm (entspricht 14 %).
4. 15 % Benzylmethacrylat / 73 % Hydroxypropylmethacrylat / 10 % PUMA 1 (80 %ig) / 2 % AIBN
   Viskosität: 18 mPa·s;
   ZSF (Aushärtung: 3 h / 80 °C): 15,7 N/mm²;
   Volumenzunahme bei einer Füllhöhe von 35 mm (entspricht 3 g Klebstoff) bei 100 °C nach 110 sek.: 13 mm (entspricht 37 %).
5. 15 % Benzylmethacrylat / 63 % Hydroxypropylmethacrylat / 20 % PUMA 1 (80 %ig) / 2 % AIBN
   Viskosität: 40 mPa·s;
   ZSF (Aushärtung: 3 h / 80 °C): 14 N/mm²;
   ZSF (Aushärtung: 0,5 h / 90 °C): 7,6 N/mm²;
   ZSF (Aushärtung: 1 h / 120 °C): 10,7 N/mm²;
   Volumenzunahme bei einer Füllhöhe von 35 mm (entspricht 3 g Klebstoff) bei 100 °C nach 110 sek.: 5 mm (entspricht 15 %).
6. 15 % Benzylmethacrylat / 53 % Hydroxypropylmethacrylat / 30 % PUMA 1 (80 %ig) / 2 % AIBN
   Viskosität: 94 mPa·s;
   ZSF (Aushärtung: 3 h / 80 °C): 14,5 N/mm²;
   Volumenzunahme bei einer Füllhöhe von 35 mm (entspricht 3 g Klebstoff) bei 100 °C nach 110 sek.: 3 mm (entspricht 9 %).
7. 15 % Benzylmethacrylat / 43 % Hydroxypropylmethacrylat / 40 % PUMA 1 (80 %ig) / 2 % AIBN
   Viskosität: 225 mPa·s;
   ZSF (Aushärtung: 1 h / 120 °C): 13 N/mm²;
   ZSF (Aushärtung: 3 h / 80 °C): 15,6 N/mm²;
   Volumenzunahme bei einer Füllhöhe von 35 mm (entspricht 3 g Klebstoff) bei 100 °C nach 95 sek.: 6 mm (entspricht 17 %).
8. 15 % Benzylmethacrylat / 33 % Hydroxypropylmethacrylat / 50 % PUMA 1 (80 %ig) / 2 % AIBN
   Viskosität: 486 mPa·s;
   ZSF (Aushärtung: 3 h / 80 °C): 14,2 N/mm²;
   Volumenzunahme bei einer Füllhöhe von 34 mm (entspricht 3 g Klebstoff) bei 100 °C nach 95 sek.: 7 mm (entspricht 21 %).
9. 15 % Benzylmethacrylat / 25 % Hydroxypropylmethacrylat / 58 % PUMA 1 (80 %ig) / 2 % AIBN
   Viskosität: 1084 mPa·s;
   ZSF (Aushärtung: 1 h / 120 °C): 18,7 N/mm²;
   Volumenzunahme bei einer Füllhöhe von 33 mm (entspricht 3 g Klebstoff) bei 100 °C nach 95 sek.: 5 mm (entspricht 15 %).
10. 15 % Benzylmethacrylat / 25 % Hydroxypropylmethacrylat / 58 % PUMA 2 (80 %ig) / 2 % AIBN
   Viskosität: 3360 mPa·s;
   ZSF (Aushärtung: 1 h / 120 °C): 15,6 N/mm²;
   Volumenzunahme bei einer Füllhöhe von 32 mm (entspricht 3 g Klebstoff) bei 100 °C nach 95 sek.: 6 mm (entspricht 19 %).
11. Verklebung von Drosselspulen
   a) Ferritkern und Wicklung werden gefügt und vertikal ausgerichtet. Dann werden 10 mg Klebstoff (Bsp. 3) in den Spalt appliziert. Nach 30 bis 60 sek. ist der Ferritkern im Inneren der Wicklung vollständig benetzt, und es wird im Ofen bei 100 °C 15 min. ausgehärtet.
      Statt Klebstoffzusammensetzung aus Bsp. 3 kann auch Bsp. 4 verwendet werden. Aushärtungstemperatur 140 °C 60 sek..
   b) Alternativ zum Bsp. 11 a) kann der Ferritkern auch vor dem Fügen mit 10 mg Klebstoff (Bsp. 5) vollständig benetzt werden. Nach dem Fügen wird dann wie unter 11 a) beschrieben ausgehärtet.
   c) Statt im Ofen auszuhärten kann an die Spule aber auch eine Spannung (z.B. 6 V) angelegt werden. Man läßt für 5 bis 10 sek. einen Strom fließen und läßt danach auf Raumtemperatur abkühlen.
      Mit den unter 11 a), b) und c) beschriebenen Methoden können nach Auswahl der richtigen Viskosität auch größere Drosselspulen mit größeren Spalten verklebt werden.
12. Starter und Treibmittel können auch in Form getrennter Komponenten enthalten sein. Als Initiator wurde z.B. Benzoylperoxid verwendet und als Treibmittel die in der Schaumtechnologie üblichen Substanzen.
   Bei 80 °C Härtungstemperatur findet ein Aufschäumen nach frühestens 5 Min. statt. Eine nennenswerte Expansion wird z.B. mit Azodicarbonamid als Treibmittel erzielt. Eine schnelle, ausreichende Schaumbildung nach 40 bis 90 Sek. wird mit allen untersuchten Systemen bei einer Härtungstemperatur von 120 °C erzielt. Geprüft wurden u.a. p-Toluolsulfonsäurehydrazid, ein HDI-Essigsäureaddukt sowie als physikalisch wirkendes Treibmittel gasgefüllte Hohlkugeln (Mikroperlen).

## Patentansprüche

1. Ein- oder zweikomponentiger Reaktionsklebstoff auf der Basis einer oder mehrerer radikalisch polymerisierbarer Verbindungen (A) und/oder (B) und/oder (C)der allgemeinen Formel:
(H₂C=CR¹-C(=O)-O-R²-O-C(=O)-NH-)ₙ R³ (I)
worin
R¹ = Wasserstoff oder eine Methylgruppe,
R² = eine lineare oder verzweigte Alkylgruppe mit 2 bis 6 Kohlenstoffatomen oder Alkylenoxide mit 4 bis 21 Kohlenstoffatomen und
n = 1, 2 oder 3 ist,
(A) wobei R³ für n = 1 ist:
- eine Arylgruppe mit 6 bis 18 Kohlenstoffatomen,
- geradkettige oder verzweigte Alkylgruppe mit 1 bis 18 Kohlenstoffatomen oder
- cycloalkylgruppe mit 3 bis 12 Kohlenstoffatomen;
(B) R³ für n = 2 ist:
[-Q-NH-C(=O)]₂](-O-R⁴-O-C(=O)-NH-Q'-NH-C(=O))ₘ-O-R⁴-O-]
wobei m = 0 bis 10 ist und
R⁴
a) ein Polycaprolactondiol-Rest
b) ein Polytetrahydrofurfuryldiol-Rest oder
c) ein Diol-Rest ist, der sich von einem Polyesterdiol ableitet, der gekennzeichnet ist durch ein C:O-Verhältnis von > 2,6, ein C:H-Verhältnis von < 10 und ein Molekulargewicht von 1000 bis 20000 oder
R³ für n = 3 ist:
[-Q-NH-C(=O)-O-((CH₂)₅-C(=O))ₚ-]₃ R⁵,
wobei R⁵ ein Triol-Rest eines 3 bis 6 Kohlenstoffatome enthaltenden, linearen oder verzweigten dreiwertigen Alkohols und p = 1 bis 10 ist und
Q und Q' unabhängig voneinander 6 bis 18 Kohlenstoffatome enthaltende aromatische, aliphatische oder cycloaliphatische Gruppen sind, die sich von Diisocyanaten oder Diisocyanatgemischen ableiten,
(C) sowie gegebenenfalls ein oder mehrere (Meth)acrylat-Comonomere, wobei die Zusammensetzung
- 0-80 Gew.-% einer oder mehrerer der Verbindungen (B) und
100-20 Gew.-% einer oder mehrerer der Verbindungen (A) oder
100-20 Gew.-% eines Gemisches einer oder mehrerer der Verbindungen (A) und (C),
oder
- 2-80 Gew.-% einer oder mehrerer der Verbindungen (B) und
98-20 Gew.-% einer oder mehrerer der Verbindungen (C), jeweils bezogen auf die Gesamtmenge (A)+(B)+(C), enthält,
dadurch gekennzeichnet, daß der Klebstoff Treibmittel enthält, wodurch der Klebstoff beim Aushärten durch Erwärmen porös wird, wobei die Porosität im ausgehärteten Zustand mindestens 3 Vol% beträgt.

2. Reaktionsklebstoff nach Anspruch 1, gekennzeichnet durch seine Viskosität von bis zu 5000, vorzugsweise bis zu 2000 und insbesondere bis zu 500 mPa·s bei 20 °C nach Brookfield.

3. Reaktionsklebstoff nach Anspruch 1 oder 2, gekennzeichnet durch eine hohe Porosität in ausgehärtetem Zustand von mindestens 10 und insbesondere mindestens 20 Vol-%.

4. Reaktionsklebstoff nach mindestens einem der Ansprüche 1, 2 oder 3, dadurch gekennzeichnet, daß das Treibmittel bevorzugt auch der Initiator ist.

5. Reaktionsklebstoff nach mindestens einem der Ansprüche 1 bis 4, dadurch gekennzeichnet daß sie kein Lösungsmittel enthalten.

6. Verfahren zur Herstellung des Reaktionsklebstoffes nach mindestens einem der Ansprüche 1 bis 5, dadurch gekennzeichnet, daß man dem Reaktionsklebstoff das Treibmittel in einer wirksamen Konzentration, insbesondere 1 bis 5 Gew.-%, bezogen auf den Klebstoff zusetzt.

7. Verwendung des Reaktionsklebstoffes nach mindestens einem der Ansprüche 1 bis 5 zum dichtenden Verkleben von bereits gefügten Teilen.

8. Verwendung nach Anspruch 7 zum Verkleben von Drosselspulen.

## Claims

1. A one-component or two-component reactive adhesive based on one or more radical-polymerizable compounds (A) and/or (B) and/or (C) corresponding to the following general formula:
(H₂C=CR¹-C(=O)-O-R²-O-C(=O)-NH-)ₙ R³ (I)
in which
R¹ is hydrogen or a methyl group,
R² is a linear or branched alkyl group containing 2 to 6 carbon atoms or alkylene oxides containing 4 to 21 carbon atoms and
n = 1, 2 or 3;
(A) where n = 1, R³ is
- an aryl group containing 6 to 18 carbon atoms,
- a linear or branched alkyl group containing 1 to 18 carbon atoms or
- a cycloalkyl group containing 3 to 12 carbon atoms;
(B) where n = 2, R³ is
[-Q-NH-C(=O)]₂](-O-R⁴-O-C(=O)-NH-Q'-NH-C(=O))ₘ-O-R⁴-O-]
in which m = 0 to 10 and
R⁴ is
a) a polycaprolactone diol residue
b) a polytetrahydrofurfuryl diol residue or
c) a diol residue derived from a polyesterdiol characterized by a C:O ratio of > 2.6, a C:H ratio of < 10 and a molecular weight of 1,000 to 20,000 or
where n = 3, R³ is
[-Q-NH-C(=O)-O-((CH₂)₅-C(=O))ₚ-]₃ R⁵
in which R⁵ is a triol residue of a linear or branched trihydric alcohol containing 3 to 6 carbon atoms and p = 1 to 10 and
Q and Q' independently of one another represent aromatic, aliphatic or cycloaliphatic groups containing 6 to 18 carbon atoms which are derived from diisocyanates or diisocyanate mixtures,
(C) and optionally one or more (meth)acrylate comonomers, the composition containing
- 0 to 80% by weight of one or more of the compounds (B) and
100 to 20% by weight of one or more of the compounds (A) or
100 to 20% by weight of a mixture of one or more of the compounds (A) and (C),
or
- 2 to 80% by weight of one or more of the compounds (B) and
98 to 20% by weight of one or more of the compounds (C),
based on the total quantity of (A)+(B)+(C), characterized in that the adhesive contains blowing agents so that it becomes porous on curing, its porosity in the cured state amounting to at least 3% by volume.

2. A reactive adhesive as claimed in claim 1, characterized by a Brookfield viscosity at 20°C of up to 5,000 mPa·s, preferably up to 2,000 mPa·s and, more preferably, up to 500 mPa·s.

3. A reactive adhesive as claimed in claim 1 or 2, characterized by a high porosity in the cured state of at least 10 and, more preferably, at least 20% by volume.

4. A reactive adhesive as claimed in at least one of claims 1, 2 or 3, characterized in that the blowing agent is preferably also the initiator.

5. A reactive adhesive as claimed in at least one of claims 1 to 4, characterized in that it does not contain any solvent.

6. A process for producing the reactive adhesive claimed in at least one of claims 1 to 5, characterized in that the blowing agent is added to the reactive adhesive in an effective concentration, more particularly in a concentration of 1 to 5% by weight, based on the adhesive.

7. The use of the reactive adhesive claimed in at least one of claims 1 to 5 for the sealing and bonding of already assembled parts.

8. The use claimed in claim 7 for bonding chokes.

## Revendications

1. Adhésif de réaction à un ou deux composants à base d'un ou plusieurs composés (A) et/ou (B) et/ou (C) polymérisables par voie radicalaire, de formule générale :
(H₂C=CR¹-C(=O)-O-R²-O-C(=O)-NH-)ₙ R³ (I)
dans laquelle
R¹ représente un hydrogène ou un groupe méthyle,
R² représente un groupe alkyle linéaire ou ramifié ayant de 2 à 6 atomes de carbone ou des oxydes d'alkylène ayant de 4 à 21 atomes de carbone, et
n = 1, 2 ou 3,
(A) dans laquelle R³ pour n = 1 représente :
un groupe aryle ayant de 6 à 18 atomes de carbone,
un groupe alkyle à chaîne droite ou ramifiée ayant de 1 à 18 atomes de carbone ou
un groupe cycloalkyle ayant de 3 a 12 atomes de carbone ;
(B) R³ pour n = 2 représente :
[-Q-NH-C(=O)]₂(-O-R⁴-O-C(=O)-NH-Q'-NH-C(=O))ₘ-O-R⁴-O-]
où m = 0 à 10 et
R⁴ représente
a) un radical polycaprolactone diol
b) un radical polytétrahydrofurfuryldiol ou
c) un radical diol, qui dérive d'un polyester diol
caractérisé par un rapport de C:O supérieur à 2,6, un rapport C:H inférieur à 10 et un poids moléculaire de 1000 à 20000 ou
R³ pour n = 3 représente :
[Q-NHC(O)-O-((CH₂)₅-C(=O))ₚ-]₃ R⁵,
où R⁵ est un radical triol d'un alcool trivalent, linéaire ou ramifié, contenant de 3 à 6 atomes de carbone, et p = 1 à 10 et
Q et Q' représentent indépendamment l'un de l'autre des groupes aromatiques, aliphatiques ou cycloaliphatiques contenant de 6 à 18 atomes de carbone, qui dérivent de diisocyanates ou de mélanges de diisocyanates,
(C) ainsi que le cas échéant un ou plusieurs comonomères de (méth)acrylates,
où la composition contient
- 0-80 % en poids d'un ou plusieurs des composés (B) et
100-20 % en poids d'un ou plusieurs des composés (A) ou
100-20 % en poids d'un mélange d'un ou plusieurs des composés (A) et (C),
ou
- 2 à 80 % en poids d'un ou plusieurs des composés (B) et
98-20 % en poids d'un ou plusieurs des composes (C), toujours par rapport à la quantité totale (A)+(B)+(C), caractérisé en ce que l'adhésif contient un agent d'expansion, sous l'action duquel l'adhésif lorsqu'il durcit par chauffage devient poreux, la porosité a l'état durci s'élevant à au moins 3 % en volume.

2. Adhésif de réaction selon la revendication 1,
caractérisé par sa viscosité allant jusqu'à 5000, de préférence jusqu'à 2000, et en particulier jusqu'à 500 mPa.s à 20°C selon Brookfield.

3. Adhésif de réaction selon la revendication 1 ou 2,
caractérisé par une porosité élevée à l'état durci d'au moins 10 et en particulier d'au moins 20 % en volume.

4. Adhésif de réaction selon au moins une des revendications 1, 2 ou 3,
caractérisé en ce que
l'agent d'expansion (produit moussant) est également de préférence l'initiateur.

5. Adhésif de réaction selon au moins une des revendications 1 à 4,
caractérisé en ce qu'
il ne contient pas de solvant.

6. Procédé de fabrication de l'adhésif de réaction selon au moins une des revendications 1 à 5,
caractérisé en ce qu'
on ajoute à l'adhésif de réaction l'agent d'expansion (produit moussant) à une concentration efficace, en particulier à une concentration de 1 à 5 % en poids, par rapport à l'adhésif.

7. Utilisation de l'adhésif de réaction selon au moins une des revendications 1 a 5 pour le collage étanchéifiant de pièces déjà assemblées.

8. Utilisation selon la revendication 7 pour le collage de bobines d'induction.
